**Europäisches Patentamt**

**European Patent Office**

**Office européen des brevets**

Veröffentlichungsnummer: **0 286 771**

**A1**

# EUROPÄISCHE PATENTANMELDUNG

Anmeldenummer: **87890073.7**

Int. Cl.4 **B23B 5/18 , B23D 37/00**

Anmeldetag: **13.04.87**

Veröffentlichungstag der Anmeldung:
**19.10.88 Patentblatt 88/42**

Benannte Vertragsstaaten:
**AT DE FR GB IT**

Anmelder: **GFM Gesellschaft für
Fertigungstechnik und Maschinenbau
Gesellschaft m.b.H.
Ennserstrasse 14
A-4403 Steyr(AT)**

Erfinder: **Blaimschein, Gottfried, Dipl.-Ing.
Arnhalmweg 33
A-4407 Steyr(AT)**
Erfinder: **Kirchberger, Peter, Dipl.-Ing.
Schulgasse 3
A-3350 Haag(AT)**
Erfinder: **Gaggl, Josef
Michael Sieberger Strasse 12
A-4400 Steyr(AT)**

Vertreter: **Hübscher, Gerhard, Dipl.-Ing. et al
Patentanwälte Dipl.-Ing. Gerhard Hübscher
Dipl.-Ing. Helmut Hübscher Dipl.-Ing. Heiner
Hübscher Spittelwiese 7
A-4020 Linz(AT)**

Drehmaschine.

Eine Drehmaschine zur Rundbearbeitung dreh- und antreibbar eingespannter Werkstücke (W) weist einen um einen zur Werkstückdrehachse parallele Achse schwenkbar gelagerten Werkzeugsupport (6) auf, der wenigstens einen eine Werkzeugaufnahme (13) für ein Drehwerkzeug (14, 15) bildenden Werkzeugträger (9a) besitzt.

Um mit einer einfachen Maschinenkonzeption eine besonders rationelle Werkstückbearbeitung zu ermöglichen, ist der Werkzeugsupport (6) mit zumindest paarweise in einer gemeinsamen Querebene angeordneten Werkzeugträgern (9a, b) ausgerüstet, die zwischen sich einen gegenüber dem zu bearbeitenden Werkstückquerschnitt erweiterten Freiraum (12) öffnen und einander zugekehrte Werkzeugaufnahmen (13) zum wahlweisen Einsatz der Werkzeuge (14, 15) bilden.

*FIG.1*

# Drehmaschine

Die Erfindung bezieht sich auf eine Drehmaschine zur Rundbearbeitung dreh-und antreibbar eingespannter Werkstücke, insbesondere der Lagerzapfen von Kurbelwellen, mit einem um eine zur Werkstückdrehachse parallele Achse - schwenkbar gelagerten Werkzeugsupport, der wenigstens einen eine Werkzeugaufnahme für ein Drehwerkzeug bildenden Werkzeugträger besitzt.

Drehmaschinen gibt es in zahlreichen Ausführungen und mit den verschiedensten Werkzeugsupporten für die Werkzeughalterung und - abstützung, wobei auch schon Schwenksupporte vorgeschlagen wurden, die durch ein Schwenken um eine zur Werkstückdrehachse parallele Achse die Werkzeuge entlang eines Kreisbogens bewegen und sie auch einem kreisbogenförmigen Vorschub unterwerfen. Die reine Schwenkbewegung dieser Supporte führt zu recht günstigen Antriebs- und Lagerverhältnissen, doch sind die bekannten Schwenksupporte bisher mit recht aufwendigen, platzraubenden Konstruktionen verbunden und bestehen aus einem Schwenkrahmen in Form eines zweiarmigen Hebels, an dem einerseits die Werkzeugträger sitzen und anderseits ein Stelltrieb angreift. Es ist zwar möglich, zur gleichzeitigen Bearbeitung mehrerer Werkstückquerschnitte mehrere Werkzeugträger axial aneinanderzureihen, die Supporte müssen aber jedesmal für einen Werkzeugwechsel in eine geeignete Wechselposition geschwenkt werden und in einer Aufspannung läßt sich nur ein einziger Arbeitsschritt, beispielsweise ein Schrupp-oder ein Schlichtvorgang, durchführen.

Wie die DE-PS 28 36 598 oder die DE-OS 35 23 274 zeigen, sind auch schon Werkzeugmaschinen bekannt, deren Werkzeugsupporte drehbare scheibenförmige Werkzeugträger mit mehreren Werkzeugaufnahmen aufweisen, um ohne Werkzeugwechsel verschiedene Werkzeuge zum Einsatz bringen zu können. Hier sind allerdings die Supporte als Querschlitten ausgebildet, was den Bauaufwand erhöht und außerdem eigene Antriebe für die Vorschubbewegung und die Werkzeugträgerbewegung erfordert.

Der Erfindung liegt daher die Aufgabe zugrunde, diese Mängel zu beseitigen und eine Drehmaschine der eingangs geschilderten Art zu - schaffen, die sich durch ihre einfache Konzeption auszeichnet une eine besonders rationelle Werkstückbearbeitung gewährleistet.

Die Erfindung löst diese Aufgabe dadurch, daß der Werkzeugsupport mit zumindest paarweise in einer gemeinsamen Querebene angeordneten Werkzeugträgern ausgerüstet ist, die zwischen sich einen gegenüber dem zu bearbeitenden Werkstückquerschnitt erweiterten Freiraum öffnen und einander zugekehrte Werkzeugaufnahmen zum wahlweisen Einsatz der Werkzeuge aufweisen. Das Werkstück befindet sich demnach zwischen den einander zugeordneten Werkzeugträgern und ein entsprechendes Hin-und Herschwenken des Supportes bringt entweder das einer oder das andere Werkzeug zum Eingriff. Es genügt ein einziger Antrieb für den Support, um einerseits die Vorschubbewegungen durchzuführen, anderseits in die Werkzeugwechselstellung zu kommen oder das jeweilige Werkzeug auszuwählen, und außerdem lassen sich bei gleichbleibender Aufspannung von den in den Werkzeugaufnahmen gehaltenen Werkzeugen zumindest zwei Arbeitsschritte vornehmen, beispielsweise hinter einander ein Schruppen und dann ein Schlichten. Mit geringem Bauaufwand kommt es zu einer raschen Bearbeitung des Werkstückes mit kürzesten Nebenzeiten, wobei je nach Anzahl der axialgereihten Werkzeugträger ein oder gleichzeitig mehrere Querschnitte rundbearbeitet werden können.

Gemäß einer besonders vorteilhaften Ausgestaltung der Erfindung ist dem Werkzeugsupport ein zweiter, ebenfalls um eine zur Werkstückdrehachse parallele Achse schwenkbarer Support nebengeordnet, der wenigstens einen in der gleichen Querebene wie die benachbarten Werkzeugträger des ersteren Supportes liegenden Werkzeugträger aufweist. Dieses Supportpaar ermöglicht je nach Wunsch oder Bedarf den gleichzeitigen Einsatz zweier Werkzeuge pro zu bearbeitendem Werkzeugquerschnitt und/oder auch die Durchführung eines dritten und vierten Arbeitsschrittes pro Aufspannung. Außerdem ist es möglich, die beiden Supporte nacheinander einzusetzen, um beispielsweise in den jeweiligen Einsatzpausen die Werkzeuge der einzelnen Supporte zu wechseln oder durch den wechselweisen Einsatz der beiden Supporte ein zu starkes Erhitzen der Werkzeuge und damit verbundene Bearbeitungsfehler zu vermeiden u.dgl.

Besonders günstig ist es dabei, wenn erfindungsgemäß wenigstens ein Werkzeugträger der beiden Supporte mit einer Abstützeinrichtung für das Werkstück ausgestattet ist, denn durch eine solche Abstützeinrichtung kann das Werkstück am gerade bearbeiteten Querschnitt selbst abgestützt werden. Während der Bearbeitung mit dem oder den Werkzeugen des einen Supportes lassen sich, ohne den Bearbeitungsvorgang zu stören, Werkzeugträger des anderen Supportes mit ihren Abstützeinrichtungen an den Werkzeugen gegenüberliegender Stelle zur Wirkung bringen. Es ist nur für eine entsprechende Steuerung der Supportschwenkbewegungen zu sorgen, damit die Abstützeinrichtungen der bearbeitungsbedingten Querschnittsabnahme nachfolgen was aber mit vorzugsweise numerisch gesteuerten Stelltrieben - schwierigkeitslos möglich ist. Eine solche Steuerung kann aufgrund von Berechnungen, mit Hilfe von Meßfühlern für die Istwerte der Werkstückgeometrie, der Schnittkraftkomponenten, des vom Werkzeugvorschub abhängigen Schwenkwinkels u.dgl. erreicht werden.

Sind Abstützeinrichtung und Werkzeugaufnahme an einander abgewandten Seiten eines gemeinsamen Werkzeugträgers vorgesehen, braucht für die Abstützeinrichtung kein eigener, den Aufwand erhöhender Träger angeordnet zu werden.

Nach einer günstigen Weiterbildung der Erfindung besteht jeder Support aus einem zylindrischen Grundkörper, der axiale Führungen für den Aufsatz radialarmförmiger Werkzuegträger aufweist. Es entsteht ein kompakter walzenförmiger Support, der eine platzsparende Bauweise mit sich bringt und sich mit einem zweckmäßigen, einfach steuerbaren Drehantrieb bewegen läßt.

Erstreckt sich erfindungsgemäß jeder Support über die gesamte Einspannlänge und bilden die axial aneinandergereiten Werkzeugträger vorzugsweise eine Wechseleinheit, ist der Support mit wenigen Handgriffen zu bestücken, wobei die Anordnung und Zahl der Werkzeugträger rationell an das jeweilige Werkstück angepaßt werden können. Die entsprechend vorbereiteten Wechseleinheiten brauchen lediglich in die axiale Führungen eingeschoben zu werden, wo sie günstigerweise automatisch arretierbar sind, und der Support ist mit den gewünschten Werkzeugsätzen ausgerüstet.

Besonders günstig ist es auch, wenn im Freiraum zwischen zwei Werkzeugträgern bestimmter Querebenen ein Sonderwerkzeug, vorzugsweise ein spanendes Werkzeug vorgesehen ist. Mit diesem Sonderwerkzeug kann gegebenenfalls ein Abstützband od.dgl. zum Ansatz einer Abstützeinrichtung an bestimmten Querschnitten abgearbeitet werden, so daß dann anschließend nach Ansatz der Abstützung eine exakte Werkstückbearbeitung in ein oder mehreren Arbeitsgängen möglich ist.

Um optimale Abstützverhältnisse bei der Werkstückbearbeitung zu erreichen, kann die Antriebsrichtung des Werkstückes zwischen dem Einsatz der einen und der anderen Werkzeuge umkehrbar sein, so daß die Abstützung beim Einsatz beider Werkzeuge jeweils die Hauptkomponenten der von der Drehrichtung des Werkstückes abhängigen Schnittkräfte auffangen kann.

Eine kompakte, platzsparende Konstruktion entsteht, wenn erfindungsgemäß die Supporte beiderends über Lagerzapfen in Querwänden des Maschinengestells gelagert sind, welche Querwände auch die Einspannvorrichtungen für das Werkstück aufnehmen. Es sind keine eigenen Spannstöcke für das Werkstück oder eigene Lagerböcke für den Support notwendig und es kommt zu einer einfachen, stabilen Bauweise.

Für Drehmaschinen mit längsverstellbaren Einspannvorrichtungen sind erfindungsgemäß die Supporte der größten Einspannlänge angepaßt und lagern mit einem Lagerzapfen über ein Loslager axialverschiebbar in einer verstellbaren Querwand oder über ein Festlager unverschiebbar im gestellfesten Teil einer aus einem verstellbaren und einem gestellfesten Teil zusammengesetzten Querwand. Diese Drehmaschine eignet sich zur Bearbeitung unterschiedlich langer Werkstücke, wobei für alle Werkstücke die passenden Werkzeugträger bzw. Wechseleinheiten am Support montiert werden können. Durch die Relativverschiebbarkeit zwischen Support und Querwand oder zwischen den beiden Querwandteilen ist das Umrüsten der Maschine auf die jeweilige Werkstücklänge schnell und ohne Schwierigkeiten möglich.

In der Zeichnung ist der Erfindungsgegenstand rein schematisch anhand eines Ausführungsbeispieles veranschaulicht, und zwar zeigen

Fig. 1 eine erfindungsgemäße Drehmaschine im Querschnitt,

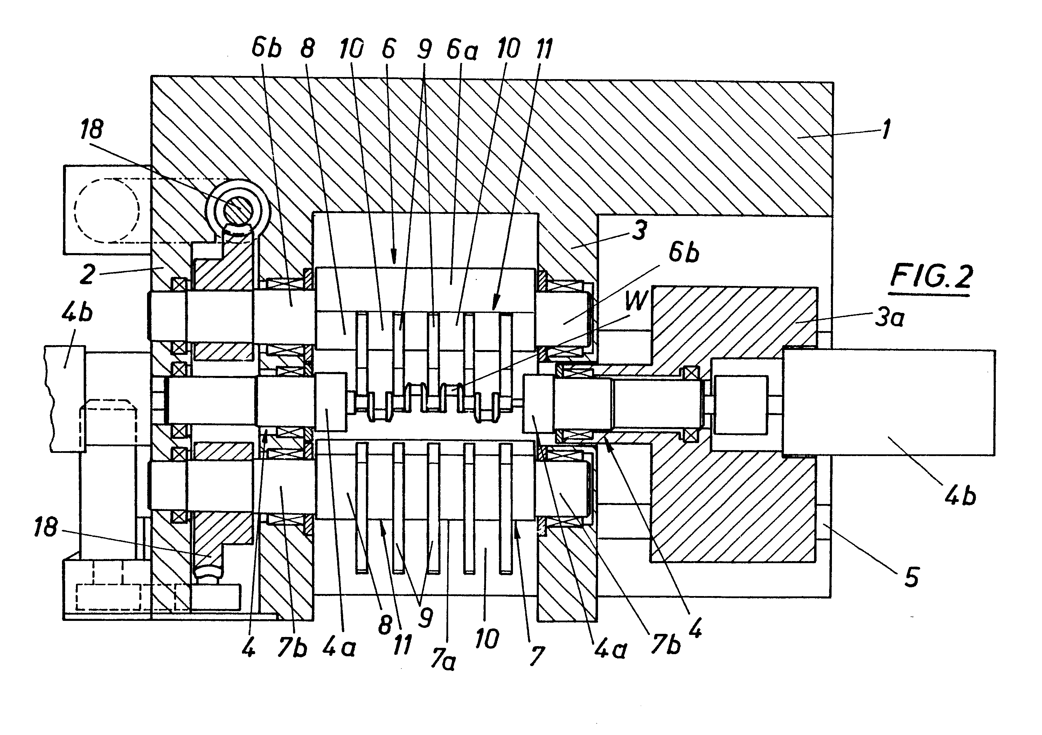

Fig. 2 einen Axialschnitt nach der Linie II-II der Fig. 1 und die

Fig. 3 bis 6 verschiedene Einsatzstellungen der Werkzeuge dieser Drehmaschine im Querschnitt größeren Maßstabes.

Ein Maschinengestell 1 bildet zwei Querwände 2, 3, die Einspannvorrichtungen 4 für das zu bearbeitende Werkstück W, beispielsweise eine Kurbelwelle, aufnehmen. Die Einspannvorrichtungen 4 sind mit Spannfuttern 4a ausgerüstet, die über eigene, umkehrbare Elektromotore 4b zur Drehung des Werkstückes W bei der Bearbeitung angetrieben werden können. Die eine Querwand 3 weist zur Lagerung der ihr zugehörigen Einspannvorrichtung 4 einen entlang von Längsführungen 5 verstellbaren Teil 3a auf, um durch die Längsverstellung dieser Einspannvorrichtung die Einspannlänge zwischen den Spannfuttern 4a an die jeweilige Werkstücklänge anpassen zu können.

Die Querwände 2, 3 des Maschinengestells 1 nehmen weiters zwei um zur Werkstückdrehachse parallele Achsen drehbar gelagerte Werkzeugsupporte 6, 7 auf, die aus einem zylindrischen Grundkörper 6a, 7a und entsprechenden Lagerzapfen 6b, 7b bestehen. In axialen Führungen 8 der Grundkörper 6a, 7a sind plattenförmige Werkzeugträgerelemente 9 eingesetzt, die in den durch die jeweiligen Bearbeitungsquerschnitte bestimmten Querebenen liegen, wobei die für die gleichzeitige Bearbeitung mehrerer Querschnitte axial nebeneinandergereihten Werkzeugträgerelemente 9 mit geeigneten Zwischenstücken 10 zu gemeinsam austauschbaren Wechseleinheiten 11 zusammengefaßt sind. Jedes Werkzeugträgerelement 9 bildet zwei radialarmförmige Werkzeugträger 9a, 9b, die zwischen sich einen gegenüber dem Bearbeitungsquerschnitt des Werkstückes W erweiterten Freiraum 12 öffnen und einander zugekehrte Werkzeugaufnahmen 13 für die einzusetzenden Drehwerkzeuge 14, 15 bilden. Wie in der Zeichnung veranschaulicht, können die Werkzeugträger 9a, 9b zu einem Wekzeugträgerelement vereint sein, es ist aber auch jeweils die paarweise Anordnung einzelner, für sich fixierbarer Werkzeugträger möglich. Die Werkzeugträgerelemente 9 können zusätzlich zu den Drehwerkzeugen 14, 15 im Freiraum 12 zwischen den Werkzeugträgern 9a, 9b ein Sonderwerkzeug, beispielsweise ein spanendes Werkzeug 16, aufnehmen, um vor allem bei ausgewählten Querschnitten Vorbearbeitungsschritte durchzuführen. Darüber hinaus sind jeweils an einem der Werkzeugträger 9a der Werkzeugträgerelemente 9 an der der Werkzeugaufnahme 13 gegenüberliegenden Seite Abstützein richtungen 17 vorgesehen, wodurch gleichzeitig mit der Bearbeitung eines Werkstückquerschnittes eine Abstützung dieses Querschnittes möglich wird.

Um die Werkzeugsupporte 6, 7 zu verschwenken und sie einerseits der für die Bearbeitung erforderlichen Vorschubbewegung unterwerfen und sie anderseits in die Werkzeugwechsel-oder Werkstückladeposition bringen zu können, gibt es geeignete, nur angedeutete Vorschubantriebe 18, die, numerisch gesteuert, die gewünschten Schwenkbewegungen der Supporte 6, 7 ausführen.

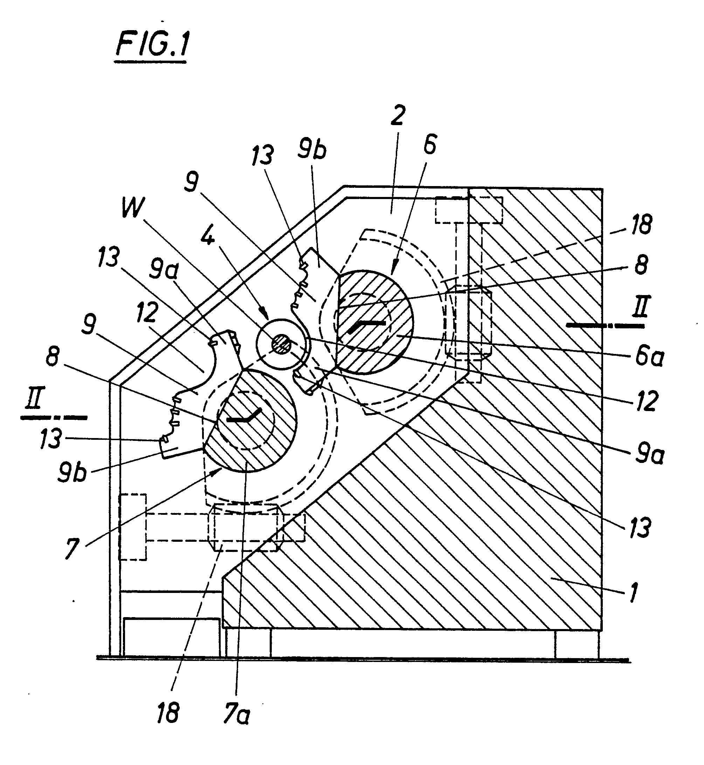

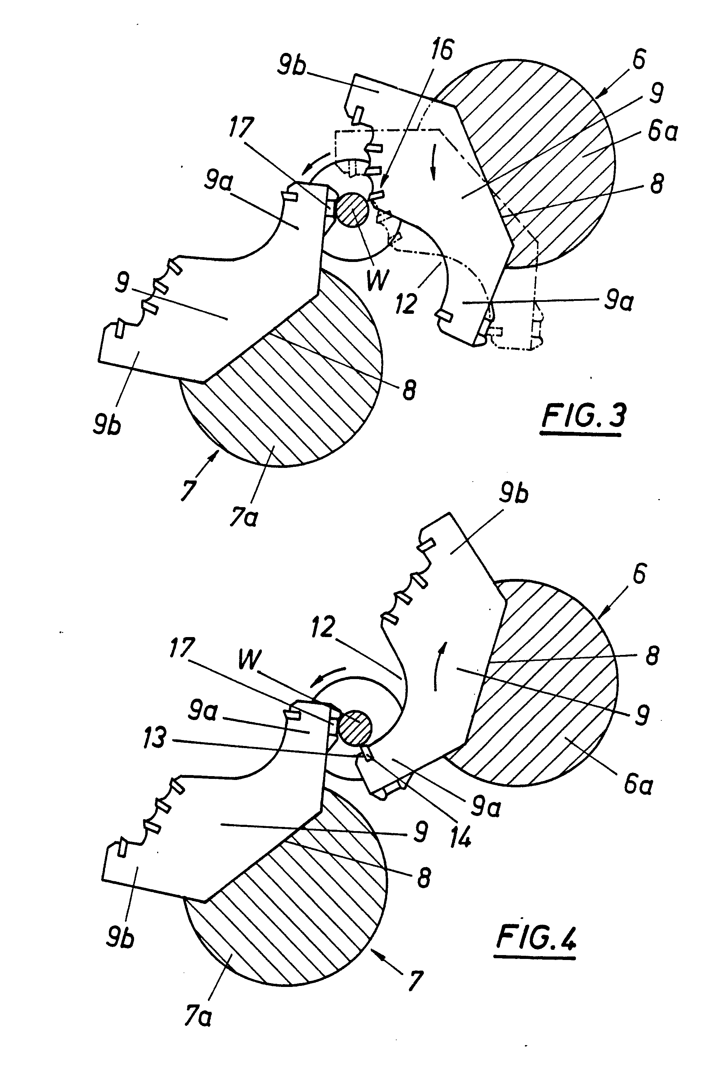

In Fig. 1 befinden sich die Werkzeugsupporte 6, 7 in ihrer Ladestellung, in der sie den Einspannbereich zwischen den Einspannvorrichtungen 4 nach oben hin für ein Einsetzen eines zu bearbeitenden oder für des Entnehmen eines bereits bearbeiten Werkstückes W freigeben. Zur Bearbeitung wird das Werkstück W über die Elektromotore 4b in Drehung versetzt und beispielsweise gegen den Uhrzeigersinn angetrieben. Wie in Fig. 3 angedeutet, wird der Support 7 mit seiner Abstützeinrichtung 17 am Werkstück W angesetzt und der die Bearbeitung übernehmende Support 6 bringt seine Sonderwerkzeuge 16 zur Wirkung. Damit kann an bestimmten Querschnitten des Werkstückes W ein Lünettenband od.dgl. bearbeitet werden, was für die folgenden Arbeitsschritte eine exakte Werkstückabstützung erlaubt. Wie angedeutet, kann dieses Andrehen des Lünettenbandes in einem Art Drehräumen mittels mehrerer spanender Werkzeuge durchgeführt werden, wozu der Werkzeugsupport 6 eine entsprechende Vorschubbewegung ausführt (Schwenkbewegung bis in die strichpunktiert eingezeichnete Endposition).

Anschließend wird, wie in Fig. 4 veranschaulicht, bei gleichbleibender Drehrichtung des Werkstückes W ein Schruppen vorgenommen, wozu der Support 6 zurückschwenkt und das Schruppwerkzeug 14 des Werkzeugträgers 9a zum Einsatz bringt. Hier können alle geeigneten Querschnitte des Werkstückes W gleichzeitig bearbeitet werden, während mittels der Abstützeinrichtung 17 auch jeder gerade bearbeitete Querschnitt über den anderen Support 7 abgestützt wird. Durch eine entsprechende Steuerung der Schwenkbewegung des Supportes 7 wird dabei die Abstützeinrichtung 17, die Querschnittsabnahme durch den Spanungsvorgang berücksichtigend, nachgeführt.

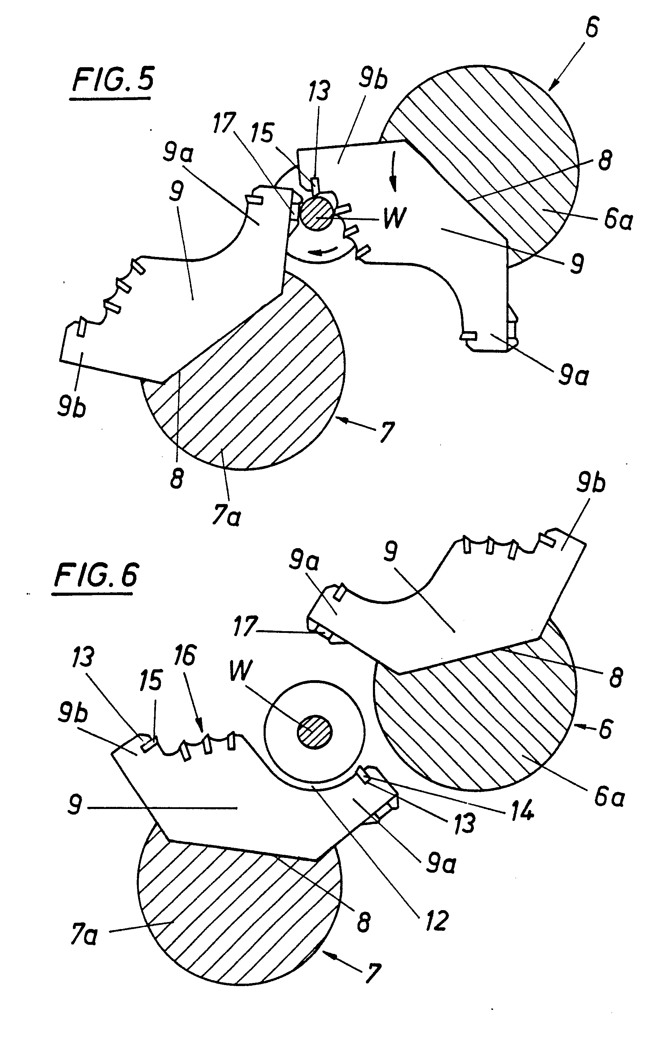

Für den folgenden Schlichtvorgang wird, wie in Fig. 5 angedeutet, die Drehrichtung des Werkstückes W umgekehrt, so daß nun, um auch für das Schlichten günstige Abstützbedingungen zu erreichen, das Werkstück W im Uhrzeigersinn umläuft. Der Werkzeugsupport 6 wird wieder so weit zurückverschwenkt, daß das Schlichtwerkzeug 15 des anderen Werkzeugträgers 9b zum Schnitt kommt, und das Werkstück läßt sich daher unter gleichzeitiger Abstützung der bearbeiteten Querschnitte schlichten. In einer Aufspanung kann das Werkstück W, beispielsweise eine Kurbelwelle, an allen koaxialen Querschnitten, beispielsweise den Lagerzapfen, geschruppt und anschließend geschlichtet werden wobei durch die direkte Abstützung der bearbeiteten Querschnitte höchste Bearbeitungsqualitäten erreichbar sind.

Wie in Fig. 6 angedeutet, können die Werkzeuge der beiden Supporte 6, 7 wahlweise zum Einsatz gebracht werden, um unterschiedliche Werkstücke zu bearbeiten, um einen rationellen Werkzeugwechsel zu erreichen, um größere Erhitzungen der einzelnen Werkzeuge zu vermeiden u.dgl. Für den jeweiligen Einsatz des gewünschten Supportes braucht dieser in der Ladestellung nur so verschwenkt zu werden, daß seine Werkzeugträgerelemente mit ihren Freiräumen 12 zwischen den Werkzeugträgern 9a, 9b zur Werkstückdrehachse gerichtet sind und diese Freiräume das zu bearbeitende Werkstück W aufnehmen können. In Fig. 1 ist diese Position für den Support 6, in Fig. 6 für den Support 7 veranschaulicht, wobei der jeweils andere Support weggeschwenkt wird. Gemäß Fig. 6 ist daher der Werkzeugsatz des Supportes 7 zum Einsatz bereit und der Support 6 dient nur mehr zur Werkstückabstützung.

## Ansprüche

1. Drehmaschine zur Rundbearbeitung dreh- und antreibbar eingespannter Werkstücke (W), insbesondere der Lagerzapfen von Kurbelwellen, mit einem um eine zur Werkstückdrehachse parallele Achse schwenkbar gelagerten Werkzeugsupport (6), der wenigstens einen eine Werkzeugaufnahme (13) für ein Drehwerkzeug (14, 15) bildenden Werkzeugträger (9a) besitzt, dadurch gekennzeichnet, daß der Werkzeugsupport (6) mit zumindest paarweise in einer gemeinsamen Querebene angeordneten Werkzeugträgern (9a, b) ausgerüstet ist, die zwischen sich einen gegenüber dem zu bearbeitenden Werkstückquerschnitt erweiterten Freiraum (12) öffnen und einander zugekehrte Werkzeugaufnahmen (13) zum wahlzweisen Einsatz der Werkzeuge (14, 15) aufweisen.

2. Drehmaschine nach Anspruch 1, dadurch gekennzeichnet, daß dem Werkzeugsupport (6) ein zweiter, ebenfalls um eine zur Werkstückdrehachse parallele Achse schwenkbar Support (7) nebengeordnet ist, der wenigstens einen in der gleichen Querebene wie die benachbarten Werkzeugträger (9a, b) des ersteren Supportes (6) liegenden Werkzeugträger (9a, b) aufweist.

3. Drehmaschine nach Anspruch 2, dadurch gekennzeichnet, daß wenigstens ein Werkzeugträger (9a) der beiden Supporte (6, 7) mit einer Abstützeinrichtung (17) für das Werkstück (W) ausgestattet ist.

4. Drehmaschine nach Anspruch 2 oder 3, dadurch gekennzeichnet, daß Abstützeinrichtung (17) und Werkzeugaufnahme (13) an einander abgewandten Seiten eines gemeinsamen Werkzeugträgers (9a) vorgesehen sind.

5. Drehmaschine nach einem der Ansprüche 1 bis 4, dadurch gekennzeichnet, daß jeder Support (6, 7) aus einem zylindrischen Grundkörper (6a, 7a) besteht, der axiale Führungen (8) für den Aufsatz radialarmförmiger Werkzeugträger (9a, b) aufweist.

6. Drehmaschine nach einem der Ansprüche 1 bis 5, dadurch gekennzeichnet, daß sich jeder Support (6, 7) über die gesamte Einspannlänge erstreckt und die axial aneinandergereihten Werkzeugträger (9) vorzugsweise eine Wechseleinheit (11) bilden.

7. Drehmaschine nach einem der Ansprüche 1 bis 6, dadurch gekennzeichnet, daß im Freiraum (12) zwischen zwei Werkzeugträgern (9a, b) bestimmter Querebenen ein Sonderwerkzeug (16), vorzugsweise ein spanendes Werkzeug vorgesehen ist.

8. Drehmaschine nach einem der Ansprüche 1 bis 7, dadurch gekennzeichnet, daß die Antriebsrichtung des Werkstückes (W) zwischen dem Einsatz der einen und der anderen Werkzeuge (14, 15) umkehrbar ist.

9. Drehmaschine nach einem der Ansprüche 1 bis 8, dadurch gekennzeichnet, daß die Supporte (6, 7) beiderends über Lagerzapfen (6b, 7b) in Querwänden (2, 3) des Maschinengestells (1) gelagert sind, welche Querwände (2, 3) auch die Einspannvorrichtungen (4) für das Werkstück (W) aufnehmen.

10. Drehmaschine nach Anspruch 9, mit längsverstellbaren Einspannvorrichtungen (4), dadurch gekennzeichnet, daß die Supporte (6, 7) der größten Einspannlänge angepaßt sind und mit einem Lagerzapfen über ein Loslager axialverschiebbar in einer verstellbaren Querwand oder über ein Festlager unverschiebbar im gestellfesten Teil einer aus einem verstellbaren (3a) und einem gestellfesten Teil zusammengesetzten Querwand (3) lagern.

## FIG.1

FIG.2

FIG.3

FIG.4

FIG.5

FIG.6

Europäisches
Patentamt

**EUROPÄISCHER RECHERCHENBERICHT**

Nummer der Anmeldung

EP 87 89 0073

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | DE-B-2 836 598 (BOEHRINGER) <br> * Spalte 3, Zeilen 14-50; Figuren 2,4 * | 1 | B 23 B 5/18 <br> B 23 D 37/00 |
| A | | 2-4 | |
| Y | DE-C-3 532 538 (HELLER) <br> * Spalte 4, Zeilen 19-32; Figur 2 * <br> --- | 1 | |
| A | US-A-2 184 591 (GROENE) <br> * Figuren XIV,XV * <br> --- | 8 | |
| A | US-A-2 232 324 (GROENE) <br> --- | | |
| A | US-A-4 653 158 (OEMING) <br> --- | | |
| A | DE-A-3 039 986 (GFM) <br> --- | | |
| A | US-A-2 426 932 (HORNBOSTEL) <br> ----- | | |

**RECHERCHIERTE SACHGEBIETE (Int. Cl.4)**

B 23 B 5/00
B 23 D 37/00

Der vorliegende Recherchenbericht wurde für alle Patentansprüche erstellt

| Recherchenort | Abschlußdatum der Recherche | Prüfer |
|---|---|---|
| DEN HAAG | 07-12-1987 | BOGAERT F.L. |